# EUROPEAN PATENT APPLICATION

(11) **EP 3 620 763 A1**
(43) Date of publication of application: **11.03.2020**
(21) Application number: 18193276.5
(22) Date of filing: 07.09.2018
(51) Int. Cl.: G01J 1/42, G01J 1/04

(54) **ADAPTIVE LASER-BEAM SHAPING**

(71) Applicant: Boegli-Gravures S.A., 2074 Marin-Epagnier (CH)
(72) Inventor: BOEGLI, Charles, 2074 Marin-Epagnier (CH); KRATSCH, Alexander, 2074 Marin-Epagnier (CH); LUSTENBERGER, Felix, 2074 Marin-Epagnier (CH); WEIßMANTEL, Steffen, 2074 Marin-Epagnier (CH)
(74) Representative: Weihs, Bruno Konrad

(57) **Abstract**

A method for adaptively splitting a coherent primary light beam, comprising producing a desired far-field distribution by phase modulating the primary light beam with a Spatial Light Modulator (SLM), the primary coherent light beam being directed to reflect on a display element of the spatial light modulator, thereby avoiding any moving elements to shape the primary coherent light beam, extracting from the primary light beam, after it has passed the spatial light modulator, a monitoring beam and a main beam, measuring the monitoring beam with a camera, directing the desired far-field distribution in the monitoring beam on a sensor surface of the camera. In a first option, the method comprises guiding the primary beam through a first focusing element (L1) that is configured to focus the far-field distribution onto a focusing plane of the first focusing element as a real output distribution, and focusing the far-field distribution in the monitoring beam onto the sensor surface of the camera by means of the first focusing element. In a second option, the method comprises guiding the monitoring beam through a second focusing element (L2) that is configured to focus the far-field distribution on the sensor surface of the camera. For either the first or the second option, the method further comprises adjusting a dynamic range of the camera using a variable intensity regulator to control the intensity of the incoming monitoring beam as a function of the far-field distribution, and configuring a closed loop to enable a phase calculation for the display element of the spatial light modulator, whereby an output signal from the camera is input into the closed loop for a plurality of iterations of a phase-calculation algorithm performed by a controller, wherein in the first option, the first focusing element is used, excluding the second focusing element, and in the second option, the second focusing element is used, excluding the first focusing element.

## Description

### Technical field

The invention concerns the field of adaptive beam shaping of coherent or partly-coherent radiation, in view of parallel direct structuring, micro structuring and beam splitting, as well as for an industrial use in machining material, whereby a phase-modulating Spatial Light Modulator (SLM) is used for beam shaping.

### Background

A number of publications are presented hereinafter to describe the background of the invention.

Methods for adaptive beam shaping of laser radiation by means of Spatial Light Modulators (SLM) are described only relatively seldom in professional and scientific literature. One of the most remarkable publications in this area is the paper [SIL13] by Matti Silvennoinen published in 2014. The method of proceeding described therein as the following properties:
- ultra-short pulses of radiation are used (pulse width < 500 ps);
- a phase-modulated SLM is used for beam-shaping;
- direct structuring by means of mapping a plurality of partial beams focused in an intermediate plane (Fourier plane); and
- a closed-loop is used to determine the phase iteratively and display it on the SLM display, whereby the closed-loop (CL) algorithm is configured to measure the output beam distribution at each cycle of iteration by means of a camera, and to re-inject it as an input in the iterative phase-calculation algorithm. Such algorithms will be referenced herein with the abbreviation "CL".

The disclosed manner of proceeding requires that the output distribution, or primary laser beam profile is known at the position of the SLM display. The measurement thereof requires at least a supplementary effort in time and a change of the optical set-up of the beam path, which is a drawback for production.

The disclosed set-up lacks a monolithic character, i.e., the partial extraction of the beam for the measurement by a camera, which is essential for the CL, is part of the final optical group and occurs at the last tilted mirror. For this reason, the optical set-up and its manner of operation are rather inflexible. The adaptive beam shaping may only be realized for the entire micro-structuring system, but not for the beam by itself. Unfortunately, this property is a real problem for an industrial use, which may be overcome only with difficulty, because the concept of the system must be adapted specifically for each machining task, and production is stopped during this period.

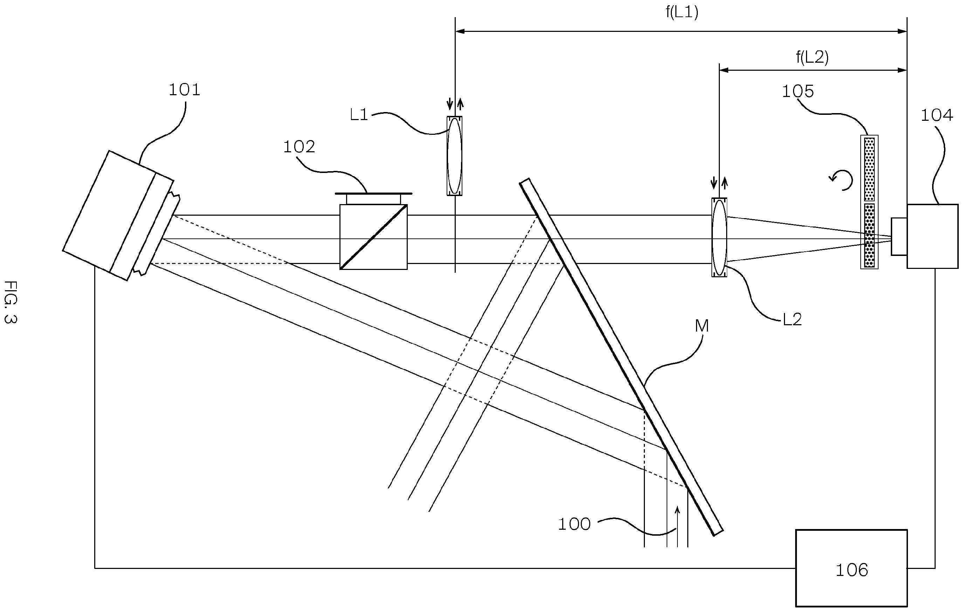

In addition, the system makes no use of any transformation lens to produce an intermediate distribution, which in turn may be projected in a reduced scale. The intermediate distribution is obtained by means of spherical phase terms that are added to the original phase distribution reproduced on the SLM, and acts as a virtual lens. This has the advantage that non-diffracted beam components will not aggregate in the zero order, but instead spread over the entire output distribution and thereby would be outshone - at least this is the case for most of the intensity distributions. A disadvantage of this method is that some information may be lost in the phase representation; see Fig. 3A in [SIL13]. This happens because the spatial frequencies in the phase representation increases towards the borders due to the spherical summand, until they get higher than the resolution of the SLM display. This also sets a lower bound for the focal length of such spherical summands, which is at around 500 mm for a 20×20 µm² pixel size. Up to this lower bound of focal length, the SLM display does not comprise any useful phase information and thereby increases the output in the zero-order content. This is the reason why it is contrary to the initially mentioned advantage. Furthermore, this loss of information towards the border may also account for the fact that a non-ordered diffraction of the laser radiation occurs, whereby radiation is diffracted in angles, which are not caused by the initial grating period and may not be corrected anymore by the CL.

A further development is disclosed in [BEC11], which also presents a method based on a CL to achieve beam splitting. The method is called a "modified iterative Fourier-transformation Algorithm" (MIFTA). The method may be described as follows:
- a part of the beam is extracted after a transformation lens by means of a beam splitter with low splitting ratio, then measured by means of a CCD camera and used as an input for the iterative cycle of the MIFTA;
- the used set-up is monolithic and allows to achieve a beam splitting into individual sub beams that independent from the laser set-up as such; and
- the achieved beam profiles are projected in a reduced scale on a surface of a substrate to achieve a direct micro-structuring.

In the presented set-up, there is only use of nanosecond laser radiation. The publication fails to mention whether the disclosed manner of proceeding is also suitable for ultra-short pulsed laser radiation. Ultra-short pulsed laser radiation may behave differently at optical gratings because of the shorter time-dependent length of coherence and the greater bandwidth during diffraction at optical gratings.

The display of the utilized SLM is controlled in a binary fashion, which has the consequence that the liquid crystals oscillate around their rotation axis and thereby, the phase position of the laser vary in time, which in turn has an effect on the machining result. The solution to this problem as presented in this publication comprises to make a plurality of exposures and to shift the phase position between the exposures perpendicularly to the direction of propagation of the laser beam. This solution will significantly increase the processing time since the SLM frame-change frequency is in the range of only several 10Hz and therefore strongly restricts the context of industrial applicability because the structuring time is increased by several orders of magnitude, rendering structuring by means of radiation impossible.

The presented set-up may only be used to obtain real intermediary distributions because there is only one transformation lens before the beam splitter. The attainability of a far-field distribution without transformation lens. The simultaneous monitoring of the produced output distribution may not be realized in this manner.

Referring now to [KUA08], [KUA09], [KUA09_2]) and [JIN15], researchers working with Zhen Kuang and Walter Perrie present various uses of phase-modulating SLMs for parallel micro structuring. In these papers, the authors utilize:
- ultra-short pulsed laser for micro structuring;
- phase-modulating SLMs with pixels controlled by analog signals;
- a set-up with a projection of the intermediary distributions or the far-field distributions in reduced scale;
- beam-splitting phase gratings; and
- they show that these techniques can be utilized for a large variety of materials and radiation sources for surface modification and structuring.

The described examples always make use of phase gratings that produce beam-splitting ratios smaller than 1:200. This could be tied to the fact that for ultra-short pulsed radiation the power distribution in the partial beams in the real output distribution, which is obtained by means of Liquid Crystals on Silicon (LCoS) SLMs, differs from the theoretical distribution. This causes a loss of precision in the removal in depth among the regions that are machined in parallel. The origins of this behavior have not been studied to date. It is suspected that there may be an overlap of phase information or crosstalk between the pixels of the SLM display as well as a particular coherence behavior of the laser radiation being used. Since these errors are not yet fully known, they cannot be compensated for virtually at the time of calculating the phase values. In case it is sought to have higher splitting proportions and more reliable removal rates between the beams, it is necessary to use a control loop that utilizes the measured beam profile as input value for control.

### Laser micro machining

Laser micro machining may be used for fast and flexible machining of masks, master and specific surface modifications. In addition, it is possible to achieve a focused machining within certain solids by pico- and femtosecond pulsed laser radiation, i.e., so-called ultra-short pulsed radiation. A further advantage of ultra-short pulses is the wide spectrum of material that can be machined. Hence, it is possible to produce micrometer and sub-micrometer structures particularly in glasses, metals, metalloids, hard coatings, and plastics.

For smallest possible non-self-organizing structures that are to be structured by a laser radiation, in general a single, sharply focused beam having a comparatively large divergence will be utilized. The resulting comparatively high peak intensities in the focal plane allow obtaining such structures with pulse-energies in the range of nJ up to the lower µJ-range. In order to use this technology at industry relevant machining speeds, the usual approach has been to increase the repetition rate and feeding speed of the beam guiding systems. Alternatively, it is possible to apply adaptive beam shaping to make high pulse energies available; SLMs reveal themselves as efficient for this purpose. The phase gratings applied to the display split the beam into hundreds or thousands of partial beams and hence allow parallel machining ([SIL13]). However, it has been shown that there are a number of factors influencing the quality of the produced hologram that go beyond the mere quality of the phase calculation algorithm. This is for example the case for the dispersion and deviation in the optical projection with LCoS displays, caused by the high bandwidth when using fs-lasers ([KUA09]; [JES10]; [HAS07]; [RON12]). Again, this has a limiting effect in the machining speeds that may be achieved practically and depending on the set-up, may also account for the fact that the full energy of the laser pulses may not be made available and/or the achievable precisions of parallel machining is inferior compared to single-focus, sequential machining.

### Further, to date unsolved problems relating to micro structuring with ultra-short pulsed radiation

A possibility to increase the area rate with high pulse energies is to use masks and a homogenized, flattop beam profile and to project this resulting distribution in reduced scale. However, it often happens that beam profiles may not allow to be homogenized at all or homogenized in the long term. For this, it would be required to have an optical homogenizer that requires a stable and determined beam profile. However, real-life beam profiles of ultra-short lasers with high pulse energies are unstable over time and very often deviate too much from the ideal Gaussian profile. Furthermore, the mask production and the change of mask during the structuring require additional time.

A simple possibility to accelerate the mask change is offered by SLMs. Phase-modulating SLMs also offer the possibility to influence the beam profile of the laser. This enables to make the beam profile programmable and may be switched in fractions of seconds. However, the produced output distributions often differ from the theoretically predicted ones. By using a control loop that measures the produced output beam profile, it is possible to deal with the phase error and produce beam profiles that may be used for a precise parallel micro structuring.

Most of the set-ups of this kind known to date have a strongly limiting effect on the functionality of the laser system and often only fulfill one specific type of machining. In addition, there are still no devices commercially available that can overcome the error in the output distribution caused by the erroneous phase representation and by primary laser beams of low quality. Also, it is necessary in most of the cases to provide the actual input profile of the beam as boundary condition to the calculation methods of such set-ups, despite the fact that this has been shown not to be necessary. In such an optimized setup, if any error should occur in the output distribution that is caused by an erroneous input distribution, it would be eliminated automatically by the closed-loop algorithm. This fact may be taken into account for a monolithic black box set-up that may implement various beam splitting/shaping functions for any type of primary beam and independently of the laser source.

### Summary of invention

In a first aspect, the invention provides a method for adaptively splitting a coherent primary light beam, comprising producing a desired far-field distribution by phase modulating the primary light beam with a Spatial Light Modulator (SLM), the primary coherent light beam being directed to reflect on a display element of the spatial light modulator, thereby avoiding any moving elements to shape the primary coherent light beam, extracting from the primary light beam, after it has passed the spatial light modulator, a monitoring beam and a main beam, measuring the monitoring beam with a camera, directing the desired far-field distribution in the monitoring beam on a sensor surface of the camera. In a first option, the method comprises guiding the primary beam through a first focusing element (L1) that is configured to focus the far-field distribution onto a focusing plane of the first focusing element as a real output distribution, and focusing the far-field distribution in the monitoring beam onto the sensor surface of the camera by means of the first focusing element. In a second option, the method comprises guiding the monitoring beam through a second focusing element (L2) that is configured to focus the far-field distribution on the sensor surface of the camera. For either the first or the second option, the method further comprises adjusting a dynamic range of the camera using a variable intensity regulator to control the intensity of the incoming monitoring beam as a function of the far-field distribution, and configuring a closed loop to enable a phase calculation for the display element of the spatial light modulator, whereby an output signal from the camera is input into the closed loop for a plurality of iterations of a phase-calculation algorithm performed by a controller, wherein in the first option, the first focusing element is used, excluding the second focusing element, and in the second option, the second focusing element is used, excluding the first focusing element.

In a preferred embodiment, the method further comprises providing the coherent primary light beam by means of a collimated and at least partially coherent light source.

In a further preferred embodiment, the method further comprises structuring a surface of a working tool with the main beam, and controlling the structuring by setting the spatial light modulator to reflect a determined profile for the primary light beam.

In a further preferred embodiment, using the first option, the method further comprises adjusting the focusing plane of the first focusing element for the step of structuring the surface of the working tool, such that the focusing plane corresponds to the surface of the working tool.

In a further preferred embodiment, using the first option, the method further comprises adjusting the focusing plane of the first focusing element to an intermediate plane, and projecting the intermediate plane by means of a projecting optical set-up in a reduced scale on the surface of the working tool.

In a further preferred embodiment, using the second option, the step of structuring involves applying the far-field distribution, for obtaining the structures on the surface of the working tool, by projecting the far-field distribution by means of a projecting optical setup in a reduced scale on the surface of the working tool.

In a further preferred embodiment, the step of extracting involves a beam-splitting element, and the method further comprises integrating the beam-splitting element, the first and the second focusing elements, the spatial light modulator, the variable intensity regulator, and the camera into a single compact enclosure, whereby the single compact enclosure is configured to be an exclusive component to be placed in the primary coherent light beam, switching between the first option and the second option by means of a controller device, and adjusting the variable intensity regulator by means of the controller device.

In a further preferred embodiment, using the second option, the method further comprises splitting the primary light beam into a plurality of partial main beams by means of the spatial light modulator, individually adjusting a number of the plurality of partial main beams, angles of separation between the plurality of partial main beams after the plurality of partial main beams leaves the display element of the spatial light modulator, and intensities of the plurality of partial main beams among each other by phase control, wherein the intensities of the plurality of partial main beams among each other is controlled by the controller that is further configured to control an individual generation for each of the plurality of partial main beams, the spatial light modulator and the primary light beam.

In a second aspect, the invention provides a device configured for an adaptive splitting of an intended collimated and at least partially coherent primary light beam, comprising a Spatial Light Modulator (SLM) configured to produce a desired far-field distribution by phase modulation of the intended primary light beam, whereby the Spatial Light Modulator is further configured to reflect the primary light beam on a display element of the spatial light modulator, thereby avoiding any moving elements to shape the primary light beam; a beam splitting element positioned in the intended primary light beam after it has passed the spatial light modulator, and configured to extracting from the primary light beam, an intended monitoring beam and an intended main beam; and a camera positioned in the intended monitoring beam and further comprising a sensor surface configured to measure the desired far-field distribution in the monitoring beam. In a first configuration option, the device comprises a first focusing element (L1) configured to focus the desired far-field distribution in the monitoring beam on the sensor surface of the camera, and further configured to guide the primary beam and focus the far-field distribution onto a focusing plane of the first focusing element as a real output distribution. In a second configuration option, the device comprises a second focusing element (L2) positioned in the intended monitoring beam and configured to focus the desired far-field distribution on the sensor surface of the camera. For either the first or the second configuration option, the device further comprises a variable intensity regulator positioned in the intended monitoring beam in front of the camera, and configured to adjust a dynamic range of the camera by control of the intensity of the incoming intended monitoring beam as a function of the desired far field distribution; and a closed-loop set-up configured to enable a phase calculation for the display element of the spatial light modulator, comprising a controller connected to the camera to receive an output signal, and configured to use the output signal for a plurality of iterations of a phase-calculation algorithm performed in the controller, wherein in the first configuration option, the first focusing element is used, excluding the second focusing element, and in the second configuration option, the second focusing element is used, excluding the first focusing element.

In a third aspect, the invention provides a device configured for a machining of a surface of a working tool, comprising the device according to the second aspect, further comprising a collimated and at least partially coherent light source configured to produce the primary light beam, whereby the surface of the working tool is positioned in the main beam, and the machining results at least from a setting of the spatial light modulator to produce a determined profile for the primary light beam.

In a further preferred embodiment, wherein the device according to the second aspect is configured in the first configuration option, and further wherein the focusing plane of the first focusing element is configured to correspond to the surface of the working tool.

In a further preferred embodiment, wherein the device according to the second aspect is configured in the first configuration option, the device according to the third aspect further comprises a projecting optical set-up, the first focusing element being positioned such that its focusing plane corresponds to an intermediate plane, and the projecting optical set-up being configured such that it projects the intermediate plane in a reduced scale on the surface of the working tool.

In a further preferred embodiment, wherein the device according to claim 1 is configured in the second configuration option, the device according to the third aspect further comprises a projecting optical set-up, and the projecting optical set-up being configured such that it projects the desired far field distribution of the main beam in a reduced scale on the surface of the working tool for the machining.

In a further preferred embodiment, the device according to the third aspect further comprises a single compact enclosure configured to integrate the beam-splitting element, the first and second focusing elements, the spatial light modulator, the variable intensity regulator, and the camera, whereby the single compact enclosure is configured to be an exclusive component to be placed into the primary light beam; further wherein the controller is configured to enable a switching between the first configuration option and the second configuration option, and to adjust the variable intensity regulator.

In a further preferred embodiment, the spatial light modulator is enabled to split the primary light beam into a plurality of partial main beams, and to individually adjust a number of the plurality of partial main beams, angles of separation between the plurality of partial main beams after the plurality of partial main beams leaves the display element of the spatial light modulator, and intensities of the plurality of partial main beams among each other by phase control. The controller is further configured to control the intensities of the plurality of partial main beams among each other, by control of an individual generation for each of the plurality of partial main beams, the spatial light modulator and the primary light beam.

In a further preferred embodiment, the surface of the working tool is a surface of an embossing roller and the controller is further configured to position the surface of the embossing roller in the main beam.

### Brief description of the drawings

The invention will be understood better through the detailed description of preferred embodiments, and in reference to the figures, wherein
figure 1 shows a SLM module configuration according to an example embodiment of the invention;
figure 2 shows a further SLM module configuration according to an example embodiment of the invention;
figure 3 shows an alternative construction of the SLM module in which a mirror is used, according to an example embodiment of the invention;
figure 4 shows a further alternative construction of the SLM module in which a focusing element is positioned in front of an SLM display, according to an example embodiment of the invention;
figure 5 shows a further alternative construction of the SLM module in which the focusing element is positioned before the SLM display and only one mirror is included, according to an example embodiment of the invention;
figure 6 shows a further alternative construction of the SLM module in which the focusing element is positioned after a semi-transparent mirror according to an example embodiment of the invention;
figure 7 shows a further alternative construction of the SLM module in which the focusing element is positioned after the semi-transparent mirror, and a mirror is solely included according to an example embodiment of the invention;
figure 8 shows an SLM module as a component of a micro-structuring device according to an example embodiment of the invention;
figure 9 shows another SLM module as a component of a micro-structuring device according to an example embodiment of the invention;
figure 10 shows the other SLM module as a controllable beam splitter according to an example embodiment of the invention;
figure 11 shows an example use according to the invention, in which a parallel structuring of grooves is made with a comparatively small offset of the pulses;
figure 12 shows a further example use according to the invention, in which the parallel structuring of grooves is made with a comparatively large offset of the pulses;
figure 13 shows a further example uses according to the invention, in which profiles with a 2-dimensional output distribution are structured;
figures 14a and 14b show further example uses according to the invention for surface profiles perpendicular to a direction of propagation, during structuring with slanted 2-dimensional output distribution;
figures 15a and 15b show further example uses according to the invention for surface profiles at a structuring with comparatively small pulse offset;
figures 16a and 16b show further example uses according to the invention for surface profiles at a structuring with comparatively large pulse offset; and
figure 17 shows an example of a device configured for machining a surface of an embossing roller.

### Detailed description of preferred embodiments

### Goal of the invention

It is a goal of the invention to make it easier for a user to obtain beam shaping, and more particularly beam splitting of laser radiation. The invention, herein after named the "SLM module", in a further aim, provides a device and a method that may be integrated in any optical path, and offers a comparatively high degree of compactness and individual functionality, independent of the place of use. Another aim of the invention is to allow a splitting of any type of collimated primary beam (laser source) with a comparatively high precision, independent of beam profile, coherence behavior, phase position, bandwidth/pulse duration and laser power.

One advantage that derives from the invention is that any limitation of the SLM module may be anticipated through the understanding of the properties of its core element, the SLM display as such. Another advantage lies in the fact that the beam splitting may be implemented with very little losses only. Hence, the incoming radiation should be purely phase modulated, although a simultaneous or sole amplitude modulation would also produce this type of functionality. A further advantage is that the invention enables to switch back and forth between a real output distribution in a focal plane of a lens, i.e., the Fourier plane and a far field distribution, i.e., the diffraction image that occurs at infinite distance. A further advantage is that a comparatively high degree of precision may be achieved in the produced output distribution as well as the beam-power distribution from one partial beam to another, because the invention utilizes a closed-loop approach for the calculation of the phase values that is not dependent on the input profile or the primary beam profile of the laser source, respectively.

The inventive SLM module allows a more efficient use of the laser power by enabling parallel micro machining and machining of surfaces with a plurality of beams, too. This may be at a working station by means of an output optics used in common, or at a plurality of systems simultaneously, whereby each of the plurality of systems makes use of a split primary beam that shared by all machining systems. The parallel machining may reduce the duration of the process for machining larger surface and volumes, in linearly with the number of partial beams. When using a shared output optics for all partial beams, it becomes possible to produce groves, grating structure and other highly repetitive patterns with increased speed. The SLM module according to the invention enables to achieve a simultaneous and precise machining with a large number of partial beams, for example 1000 beams or more.

Based on the above-mentioned goals and properties of the SLM module according the invention, the production performance of a laser micro machining/structuring device may be increased drastically while still keeping a compact footprint and highly stable operation condition. Therefore this will allow for industrially applicable reductions in production cost and lead time.

### Structure and function of Iterative Fourier-transformation Algorithm (IFTA) - Closed-Loop (CL) module Prerequisites for the input beam

The primary laser beam used throughout this invention must respond to a number of criteria in order to enable the functionality of the SLM module. A first criterion is that the primary beam at the input of the SLM module is collimated or parallelized. The person skilled in the art is aware of the fact that the beam for wave-optics elements and optical gratings muss have a coherence length in the order of the grating period. Since ultra-short pulsed radiation is used in the context of this invention, the time-dependent coherence length may also be very short, such as for example only a few micrometers.

The person skilled in the art is further also aware, that when a SLM display of the SLM module comprises an element based on liquid crystals on Silicon (LCoS) technology, the input radiation must inherently obey to determined polarization states relative to an orientation of the SLM display. This can be adjusted and taken care of by means of commercially available structural elements positioned in front of the SLM module. This is the reason why this will not be discussed further in the present document. It is also generally known that LCoS technology has a strongly wavelength-dependent behavior.

Also generally known is the fact that a user of the SLM module may select and adjust the beam-diameter, the mean optical power or a pulse energy, as long as the user remains below physical destruction limit of any component found in the SLM module.

### Structure of the SLM module

As will become apparent from the following description, the inventive method and device enable the user, starting from a primary input beam that fulfills the above-mentioned criteria, to split this primary input beam into an arbitrary number of output beams, which may be put to use at the user's choice. The output beams may be controlled in their spatial and intensity distribution in a time-dependent manner by the user or a control process. The invention further enables to use either a real intermediate distribution or merely an angle spectrum, depending on the desired machining task. The invention enables to achieve this without any precise knowledge of the profile of the primary input beam or its coherence length. The invention requires no other prerequisites for the primary input beam than those described herein above. Any deviations occurring in the output main beam due to the lack of information may be compensated by means of the closed-loop algorithm, which is used to optimize the output distribution.

The invention enables a so-called "Black-Box-Optics" that may be integrated into any kind of optical paths for micro machining.

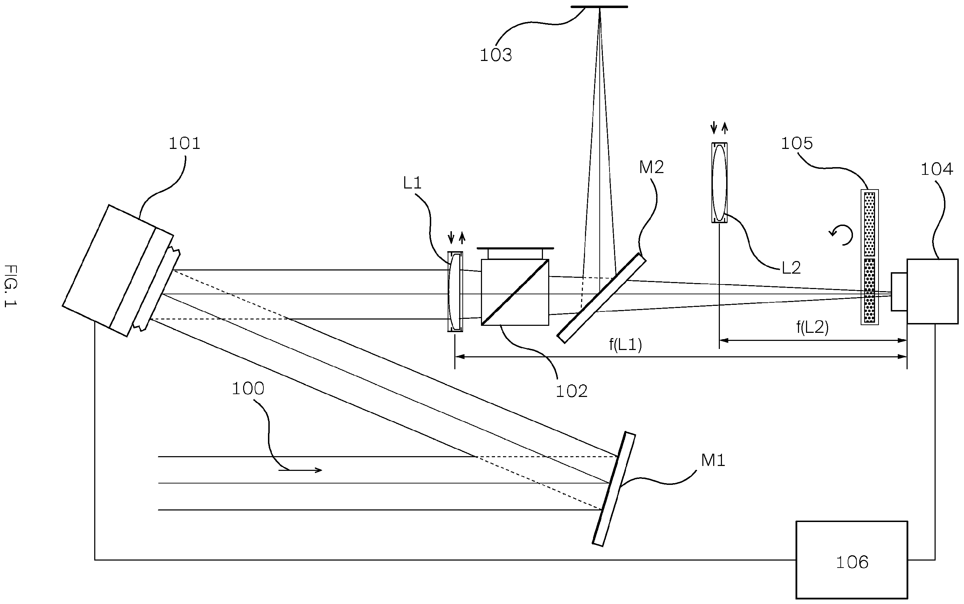

Figure 1 shows an SLM-module configuration according to an example embodiment of the invention, which allows to enable the features of the invention as described herein above. A mirror M1 directs radiation from a primary beam - originating from a laser source not shown in figure 1 but suggested by the reference 100 and the corresponding arrow in the drawing - in a comparatively tight angle on a reflecting SLM head 101. The SLM head 101 is considered a central element of the SLM module. The SLM head 101 comprises a SLM display - not explicitly referenced in figure 1 - which is used to apply beam-shaping phase values to the incoming primary laser beam. The SLM display may be, e.g., realized as an LCoS - also not explicitly referenced in figure 1. As is known to the person skilled in the art, LCoS displays cause effects that influence a polarization of the radiation and thereby influence the efficiency of diffraction. To counter this effect, the SLM module comprises an additional polarizing beam splitter 102 placed after the SLM display, which filters out falsely polarized and/or non-diffracted radiation. The SLM module further comprise a semi-transparent extraction mirror M2. The polarizing beam splitter 102 is installed in the optical path in front of the extraction mirror M2, thereby making sure that a distribution after reflection on the SLM display appears the same way on a CCD camera 104 positioned in an optical path of a monitoring beam coupled out from the primary beam by the semi-transparent mirror M2, and in the Fourier plane 103 where the real output distribution occurs, or infinity, depending on the case. The semi-transparent mirror M2 may be realized, e.g., as a dielectric reflection-coated mirror with plane-parallel substrate that is transparent for the wavelength of the primary beam. Preferably, mirror M2 has a surface quality of industry standard for transparent optics and glass surfaces. In this manner, the monitoring extracted/coupled-out at the mirror M2 may be used for beam analysis without having excessive power losses despite the comparatively high beam power utilized in micro machining environments. In the optical path in front of the CCD camera 104, a variable intensity regulator 105 is configured for adjusting the intensities to the dynamic range of the CCD camera 104 so that it can be used in an optimized manner and independent of the power of the beam, the output distribution and/or the beam-splitting ratios. The variable intensity regulator 105 may for example be realized as an ND (Neutral Density) filter.

A picture recorded by the CCD camera 104 must always be the Fourier transformation of the input distribution. For this reason, the sensor surface (not represented in figure 1) of the CCD camera 104 must be located in the focal plane of a focusing optics element, such as, e.g., a first focusing element L1 and a second focusing element L2. In the example of figure 1, the first focusing element L1 and the second focusing element L2 are never placed together, i.e., simultaneously, in the optical path between the SLM head 101 and the CCD camera 104. Preferably, the CCD camera 104 is centered on the optical axis of the monitoring beam, which was extracted by the semi-transparent mirror M2.

The CCD camera 104 enables to obtain a measure of the output distribution, which in turn may be used as an input into an iterative Fourier-Transformation-Algorithm (IFTA)-based closed-loop control to optimize the phase distribution generated by the SLM head 101. As mentioned before, this requires measuring the output distribution with the CCD camera 104 and feed the algorithm executed on the controller CPU 106 as part of the boundary conditions of the IFTA. The IFTA algorithm will not be discussed here in more detail, because it may be found in dedicated literature from prior art. The calculated phase values are applied subsequently to the SLM display.

### Configuration of the SLM module

The SLM module may adopt any one of two hardware configurations to enable a switch between angular spectrum and real intermediate distribution. A switching between both of these configurations, as well as a change of filter settings for the variable intensity regulator may be realized manually or with automated switching means.

In a first hardware configuration, called configuration 1 herein, and as represented in figure 1, the first focusing element L1 is placed in the optical path. L1 focuses the laser radiation on the sensor surface of the CCD camera 104, which is placed at a distance of the focal length f(L1) of L1 and behind the semi-transparent mirror M2. Furthermore, the CCD camera 104 is placed in a plane of the main output beam perpendicular to the propagation direction of the main output beam, i.e., the mask plane. In the example of figure 1, the first focusing element L1 is positioned in front of the polarizing beam splitter 102. In an alternative not illustrated in figure 1, the first focusing element L1 may be positioned behind the polarizing beam splitter 102. In the configuration of figure 1, the second focusing element L2, which as a focal length f(L2), is not positioned into any optical path. The distribution recorded by the CCD camera 104 is identical and mirrored as compared to the mask plane. Configuration 1 enables that the main beam that is reflected from the mirror M2, is focused in a real intermediate distribution.

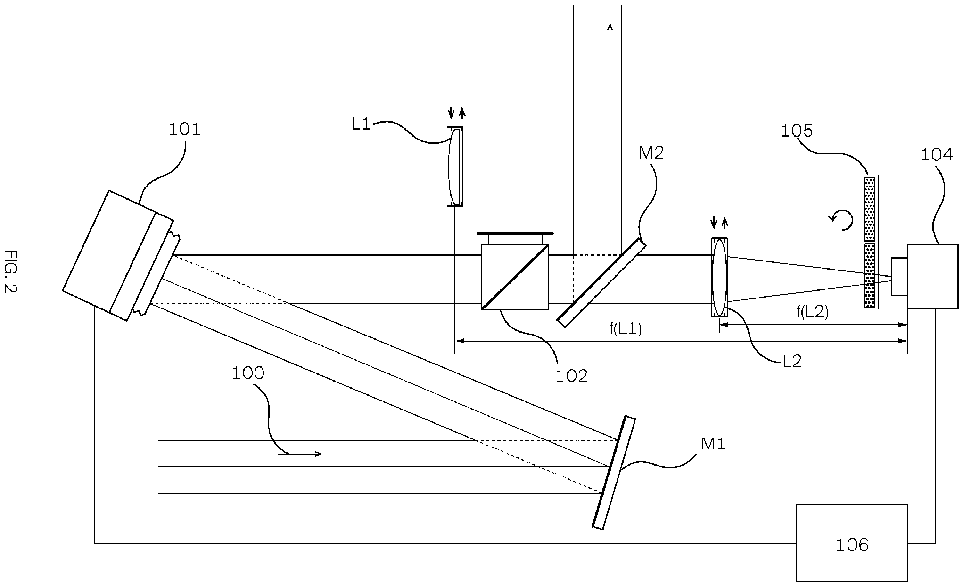

Now looking at figure 2, it represents a configuration 2, which is in most respects identical to configuration 1 from figure 1, except that the second focusing element L2 is positioned into the optical path of the monitoring beam extracted through the semi-transparent mirror M2. The sensor surface (also not shown in figure 2) of the CCD camera 104 is now placed in the focal plane of the second focusing element L2, i.e., at the distance of the focal length f(L2) of the focusing element L2. Hence, for this configuration 2, L1 is not positioned into any optical path. Configuration 2 enables that the main output beam, which is reflected at the mirror M2 is not focused into an intermediate distribution. The target distribution of the diffraction grating is formed at infinity as an angular distribution. The primary input beam is split into a plurality of partial main beams.

### Alternative constructions

The invention may be realized through a variety of alternative constructions that all provide the same functionality. Each of the variety of alternative constructions may be considered to possess various disadvantages and advantages as compared to configurations 1 and 2.

Figure 3 shows an alternative construction in which only one dielectric mirror M is used - the mirror M1 from figures 1 and 2 is not used here. The dielectric mirror M must comply with all requirements as previously presented. The positions for the first focusing element L1 and the second focusing element L2 may be identical to those discussed in the frame of figures 1 and 2 - immediately before or behind the dielectric mirror M. One advantage in the present construction as compared to that of figure 1 is that it is inherently more compact. However, the angle between incoming beam and the outgoing beam is imposed. The construction of figure 3 is in a similar mode as configuration 2 - for an easier reading, we will say that it is in configuration 2. In order to switch to configuration 1, the first focusing element L1 must be positioned into the optical path and the second focusing element L2 must be removed from the optical path. Arrows next to the elements L1 and L2 symbolize this.

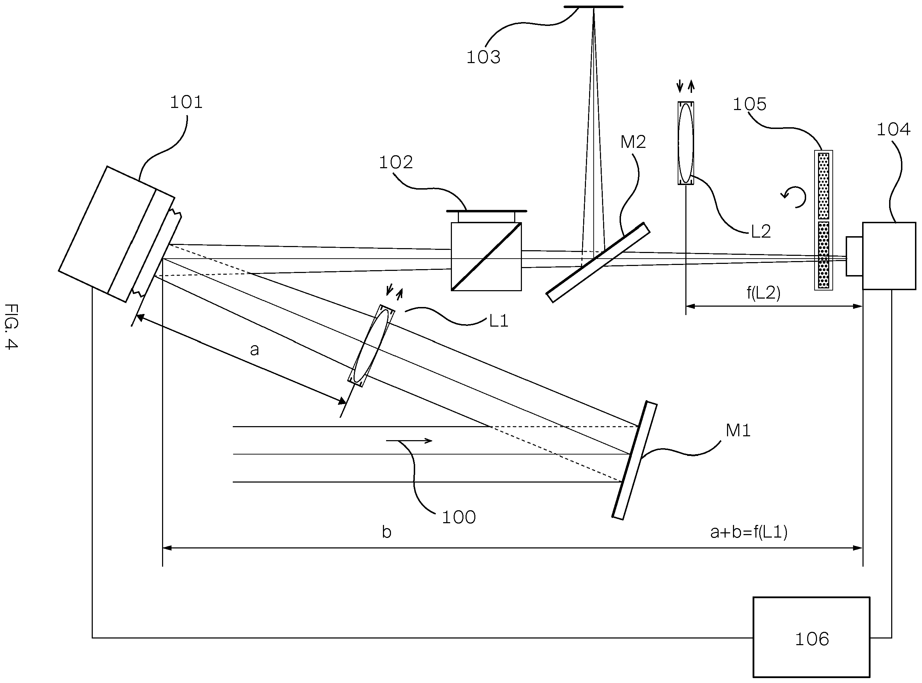

Figure 4 shows a further alternative construction in configuration 1. In this alternative construction, the first focusing element L1 is positioned at a distance a in front of the SLM display, and similar as in figure 1, two mirrors M1 and M2 are used. Both focusing elements L1 and L2 are movable, as symbolized by arrows next to the elements. There is no obvious advantage with this alternative construction. One potential difference as compared to the one of figure 1, is that the focal length for the first focusing element L1, represented as f(L1)=a + b within the figure, must be comparatively larger than for example in figure 1, which in turn reduces a resolution of the output distribution.

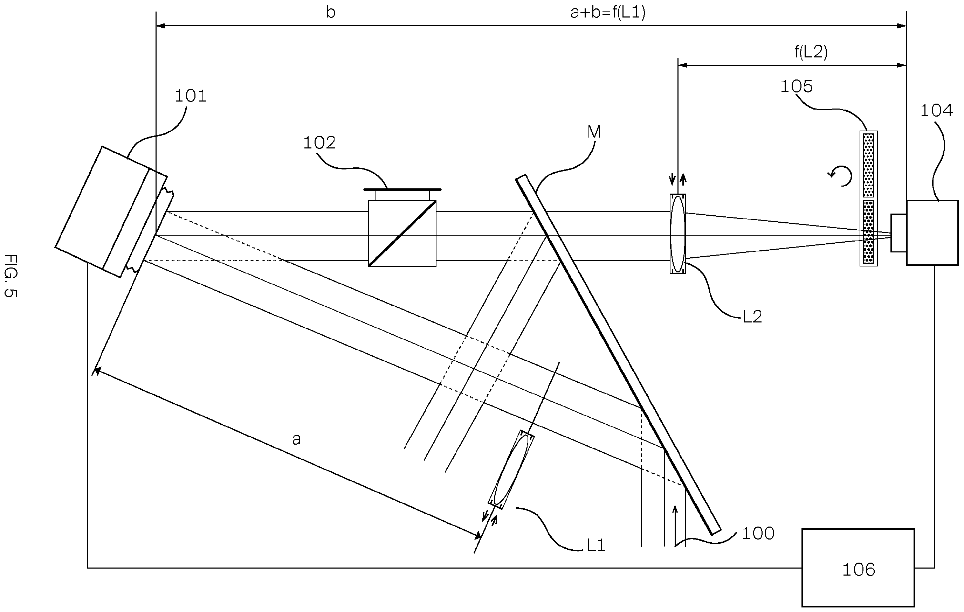

Figure 5 shows a similar construction as that of figure 4, but in the configuration 2 setup, whereby again only 1 mirror M is used. The same properties as noted for figure 3 apply here also: the device can be made more compact but on the other hand, one limits the angles for coupling and decoupling of the laser beam into and out of the SLM module.

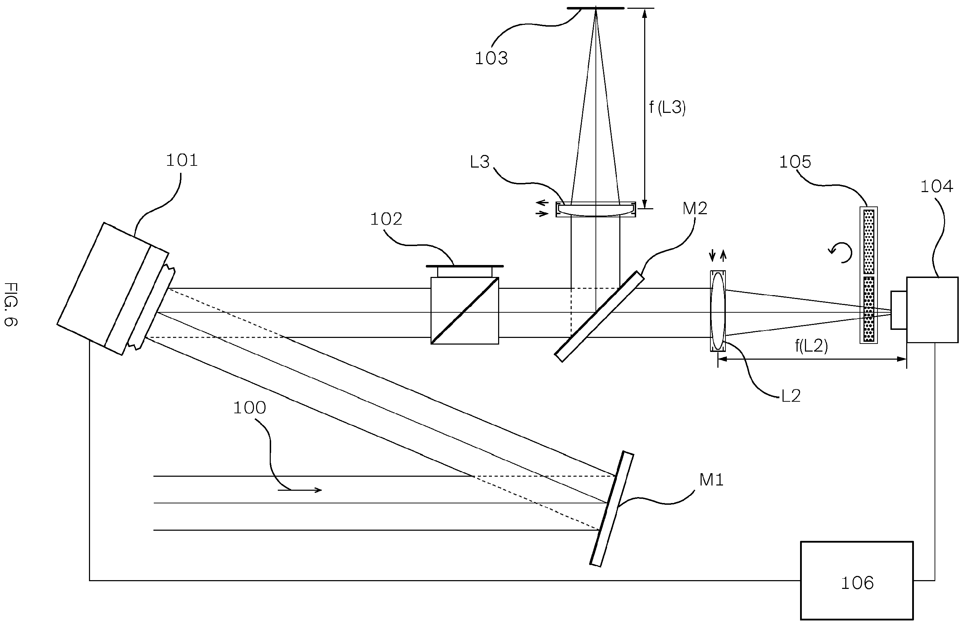

Figure 6 shows a construction in configuration 1, in which a third focusing element L3 (for example a lens) having a focal length f(L3) is located behind the semi-transparent mirror M2. The second focusing element L2 may be inserted into or removed from of the optical path as symbolized by arrows next to the second focusing element L2. One advantage is that the second focusing element L2 may be fixed into the optical path, i.e., it does not need to be moved anymore when switching between configurations.

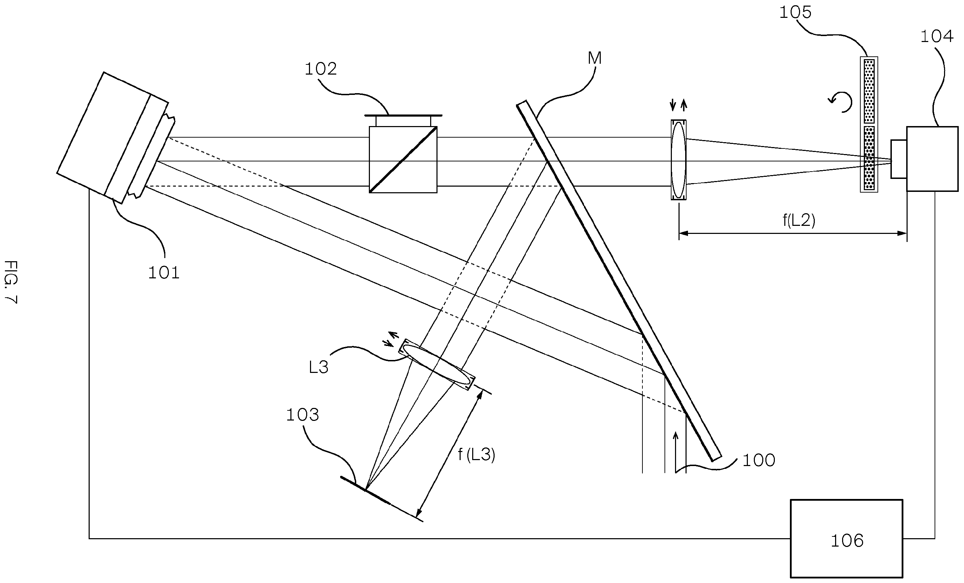

Figure 7 shows a construction similar to that of figure 6, but with a single mirror M to render the device more compact.

### Losses in the optical path

One of the advantages of the inventive SLM module is to enable a beam shaping with virtually no losses. Consequently, no absorption masks or scatter masks need to be used to obtain the desired output distribution. The beam shaping is done exclusively by means of the phase distribution applied to the SLM head. However, the person skilled in the art will acknowledge that for real life optical paths, there will inevitably occur small losses to a laser beam.

When using ideal optical elements, there will only be scattering losses at the diffraction grating of the SLM, and this only for higher diffraction orders, since the sought-after target distribution is located exclusively in the first order of diffraction.

### Areas of use and possibilities of applications

### Parallel micro-structuring / parallel structuring

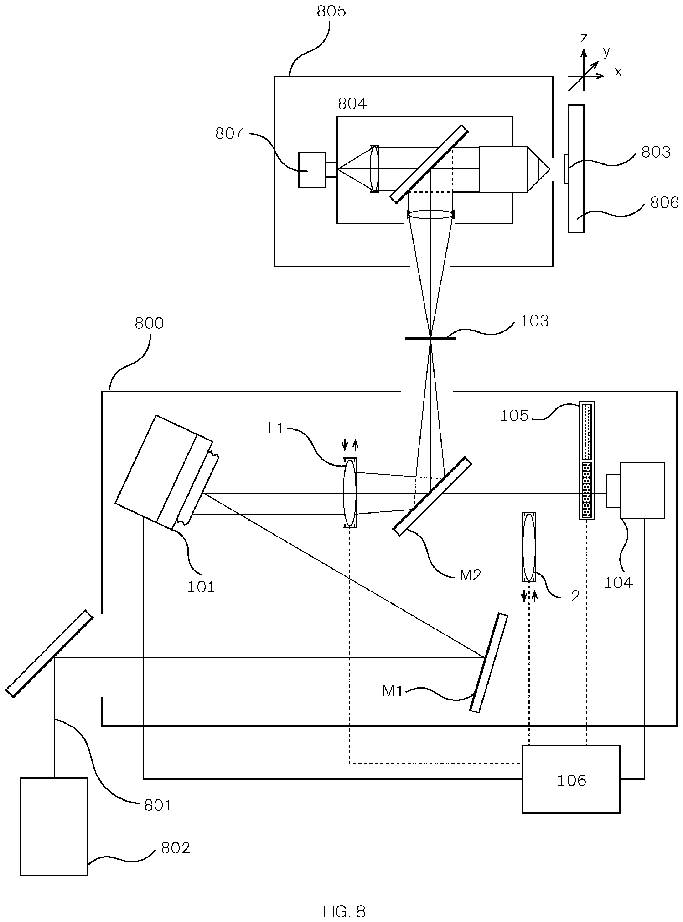

The inventive method and device may be integrated into any optical path, as long as there is enough physical space to do so and the afore-mentioned conditions for the laser-beam are fulfilled. Figure 8 shows an example of such a system for micro structuring by projection exposure, wherein the mask plane in the optical path is replaced by the real output distribution 103 of an SLM module 800 configured in configuration 1. The SLM module 800 is fed at its input with a primary laser beam 801 output from a laser source 802. The real output distribution 103 is projected onto a work piece 803 by means of a microscope 804 of a micro-machining head 805, also called means for parallel micro structuring. The work piece 803 is mounted on a positioning stage 806 that is configured to move the work piece 803 at least in a plane X-Y perpendicular to the direction of the projected light beam. A second camera 807 is configured to monitor the main beam that is projected onto the work piece 803 and may also serve as part of an autofocusing device. The person skilled in the art is aware of the manner in which optical systems function and their parameters for projection imaging. This knowledge of the person skilled in the art essentially provides the parameters of the applicable phase distribution and do not have any limitative effect on the SLM module 800. The controller CPU 106 is further configured to control the positioning of the focusing elements L1 and L", as well as the variable intensity regulator 105.

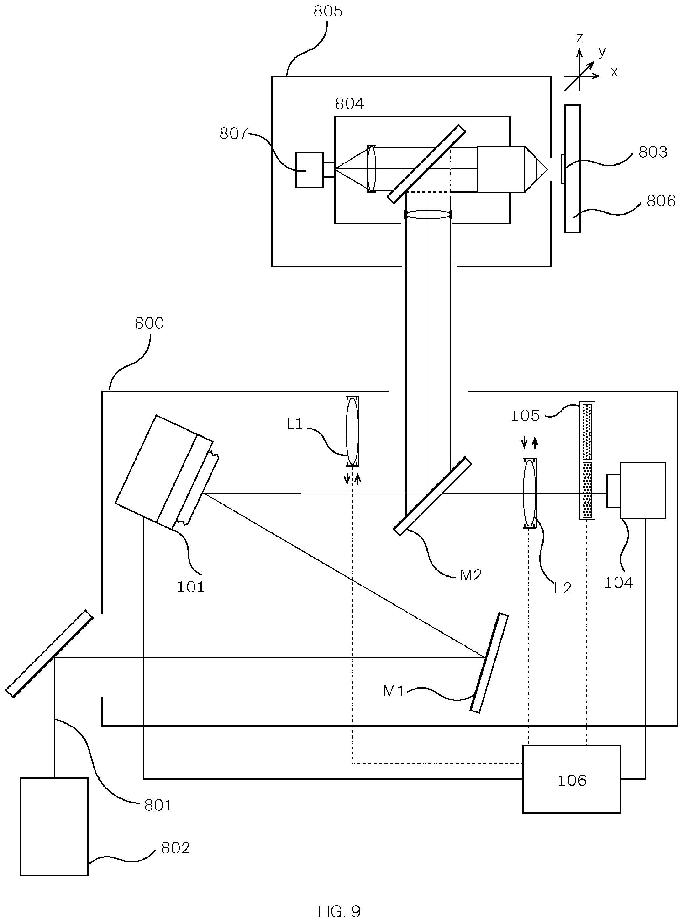

Figure 9 shows an example of an integration of the SLM module 800 in a system for focused machining. In this particular case, the SLM module 800 is configured in configuration 2. It allows that the number of partial main beams that can be used for laser machining may be increased. Ideally, for most optical paths and optics to be used in such a system, the SLM module 800 should be located as close as possible to the final optics; in the present example this would be the micro-machining head 805, in order to avoid any restriction caused by its aperture.

The increased number of focal points has the beneficial effect that machining speeds of the laser process that are based on focused beams increase in proportion to the number of partial main output beams. In addition, it also allows making a more optimal use of the laser power. The switching between the partial beam distribution and the focal distribution may occur at a speed corresponding with the display refresh rate of the SLM head 101, and involves no moving part at all. As the person skilled in the art is aware of, phase modulation also allows correcting Zernike modes and in turn, this will increase the focus quality. If the erroneous phase position of the primary beam is also known, it is possible to improve the beam quality of all partial main beams by means of the SLM module 800. The SLM module 800 does not influence imaging scaling factors as well as beam diameters otherwise.

### Examples of structuring for parallel micro machining

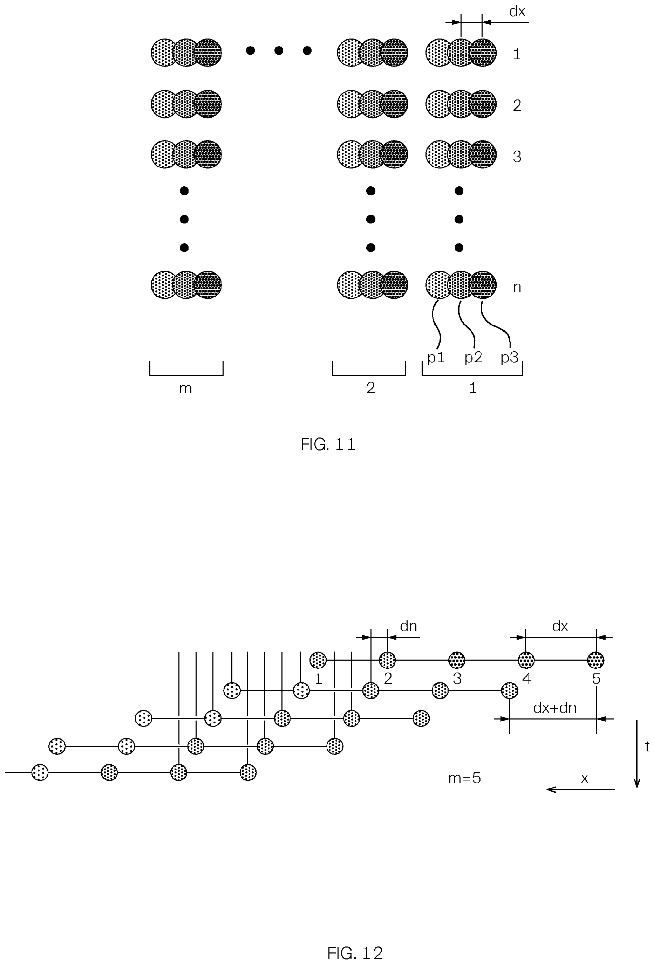

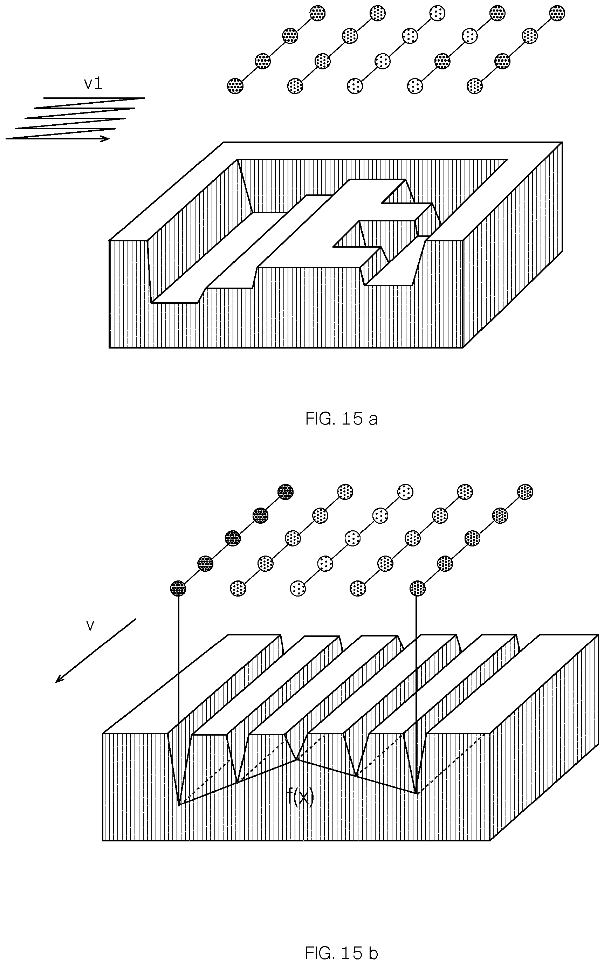

Parallel micro structuring by means of many partial main beams with individually controllable pulse energy or beam power offers similar possibilities of structuring as with individual beams. Figure 11 schematically shows a beam offset *dx* for a pulsed primary beam that is split into *n* × *m* partial output beams. p1, p2, p3, etc. denominate the pulse sequence in time. The work piece is moved along the x-axis of the rectangular distribution, whereby an offset dx occurs between two laser pulses. In this manner, it is possible to draw a set of *n* lines, whereby each line is irradiated multiple times, normally in a slightly overlapping manner. The resulting profile of lines have a constant depth along a line in direction v and the set of lines has a distribution f(x) of maximal depths, as shown in figure 15b.

A further possibility to work with such a short pulse-offset is a so-called surface removal, as shown in figure 15a. In this case, the work piece is moved in respect to the laser according to a feed v1 in such a manner that a surface is covered that is limited by neighboring partial beams. In this manner it becomes possible to produce 2.5D surface topographies.

A further potential approach in parallel micro structuring consists in spacing the partial beams by a distance of dx, as shown in figure 12. The distance covered in time between each pulse will be slightly more than dx so that an effective distance between each pulse will result in dn. In the specific example shown in figure 12, m=5 pulses will be placed between two partial beams spaced with dx. Using this machining strategy, the effective distance between each pulse can reduced. The structuring time for simple gratings can be decreased significantly by using optimized ratios between dx, dn, and m.

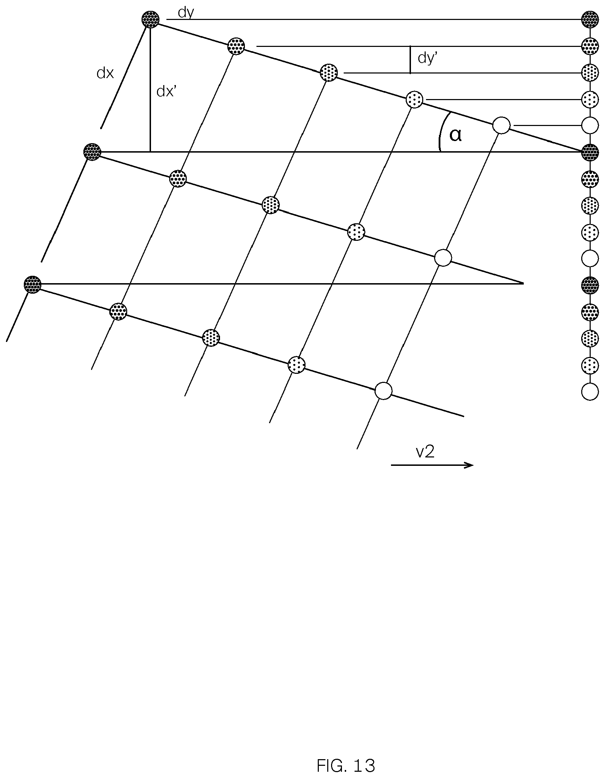

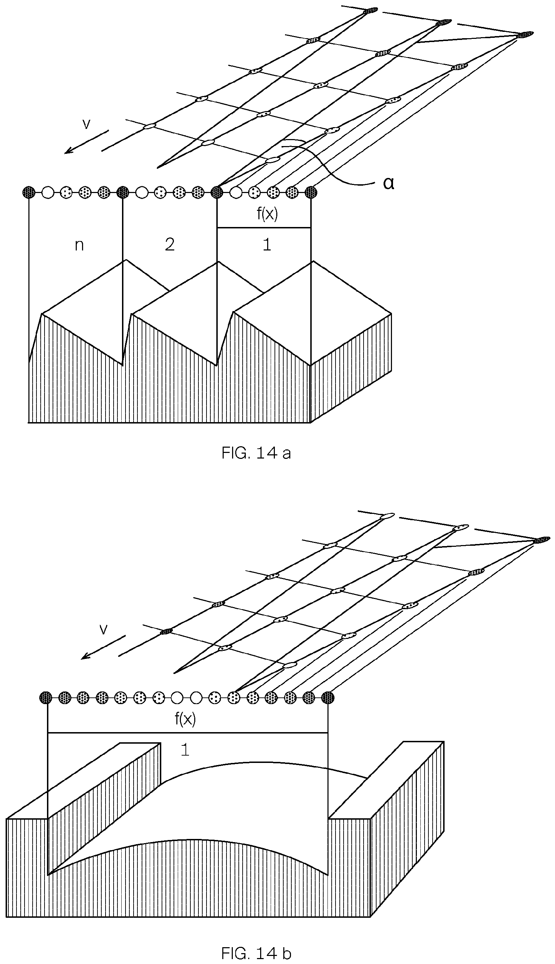

An even further possibility is to slant a periodic output beam distribution as compared to the feed by an angle alpha as illustrated in figure 13. In this manner, each partial beam may produce a line with constant removal depth or illumination dose, and depending on the angle alpha, the individual illuminated traces may also overlap perpendicularly to the feed v2. The apparent distance dy' between pulses increases with an increase in the slanting angle alpha. By designing the spatial distribution of the partial beams in x and y direction by dx and dy, respectively, one can generate an apparent intensity distribution along one dimension. Hence, it becomes possible to produce any type of section profile f(x) in a single pass -see also figures 14a and 14b. If all lines in the output distribution are identical among themselves, then *n* identical profiles are produced simultaneously - see figure 14a.

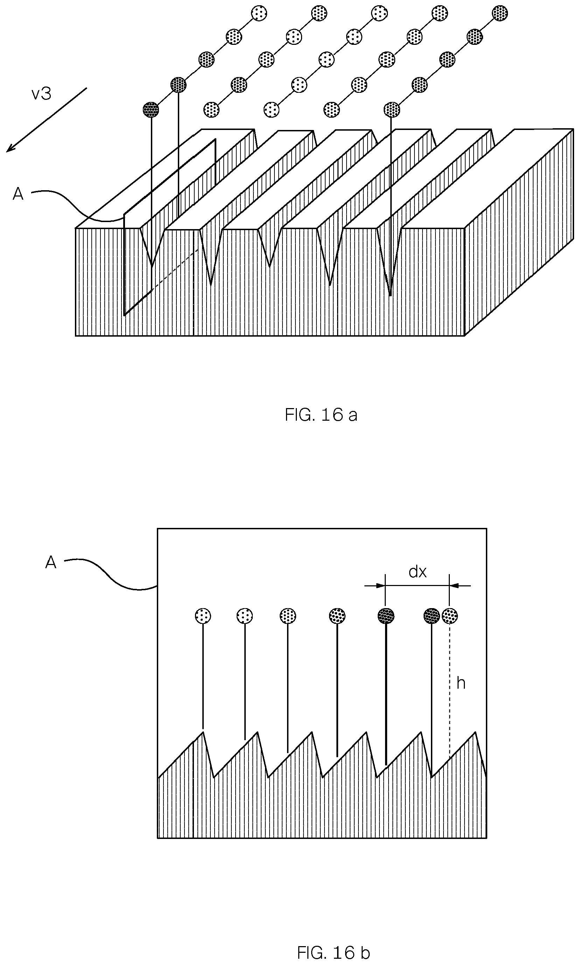

Making use of a pulsed beam for working, a structuring along the partial beam may allow attributing a periodic function f(x) to the removal-depth or illumination intensity. To this end the feed, the number of partial main beams along the line and their distance must have a fixed ratio. Figure 16a shows a profile A along the left line in direction *v3*, which is illustrated in cross-section view in figure 16b. The pulse energy of the partial beams along this line is decreased continuously.

### Structuring of an embossing roller surface

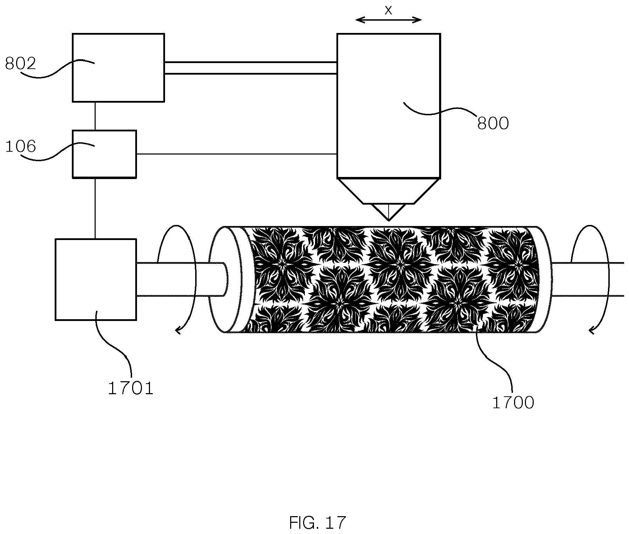

Figure 17 illustrates an example device that may be used to structure an embossing pattern 1700 on a working tool, more specifically an embossing roller surface. The SLM module 800 inputs the primary light beam, i.e., the collimated and at least partially coherent light source from the laser source 802, and directs at its output the main beam on the surface of the embossing roller. Various options are available to adjust the relative position between the SLM module 800 and the embossing roller. In the illustrated example, the SLM module 800 may be moved according to the indicated x-direction, but the embossing roller may also be rotated by a motor 1701 according to the indicated circular arrows. The controller 106 is further configured to adjust the relative position between the SLM module 800 and the embossing roller, thereby controlling the SLM module 800, the laser source 802 and the motor 1701 as appropriate, in order to achieve a structuring of the embossing roller surface with the embossing pattern 1700.

### Beam splitting

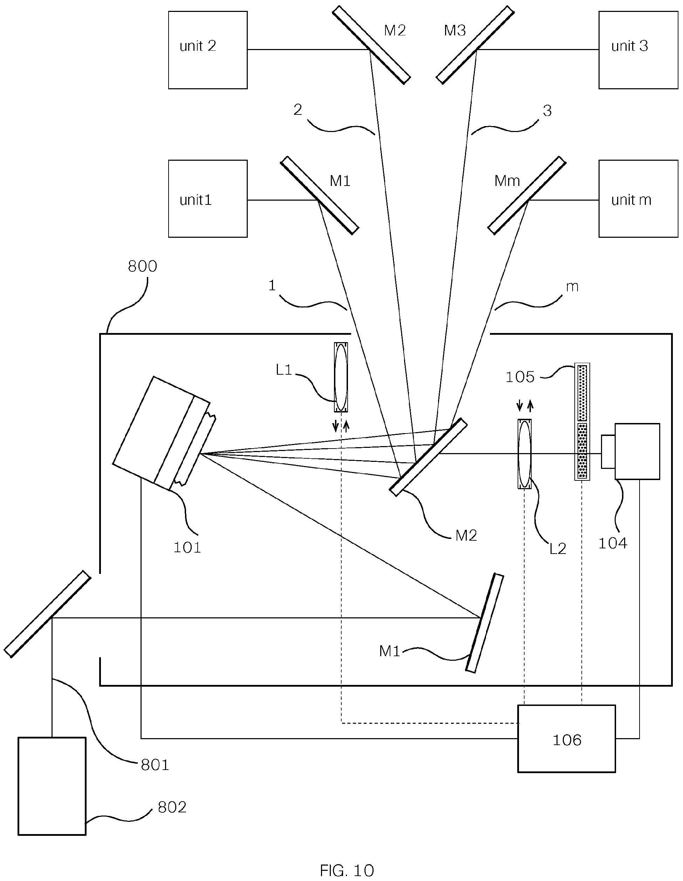

Figure 10 illustrates the functional principle of the beam splitting/separation functionality. The SLM module 800 in configuration 2 is positioned at the output of a laser-beam source 802. For the primary laser beam 801, the previously mentioned restriction still apply. The primary laser beam 801 is diffracted at a phase grating which has been calculated as described into m partial main beams and then deviated to m differently oriented mirrors M1-Mm. These mirrors subsequently reflect the respective partial beams to m different working-, exposure- and/or measuring-stations or beam dumps (unit 1 - unit m). The power distribution, the number and the exit angles of the partial beams among themselves may be controlled over time by switching the phase values at the SLM head 101. This allows to use the laser power more efficiently and to use only one single laser source for different tasks. In addition, the SLM module 800 as already mentioned above allows correcting erroneous Zernike modes and may therefore contribute to improve the beam quality of every partial beams.

### Literature

**Table of Literature**

| **Reference** | **Source** |
|---|---|
| [SIL13] | M. Silvennoinen,J. Kaakkunen, K. Paivasaari, P. Vahimaa, "Parallel femtosecond laser ablation with individually controlled intensity," Opt. Express 22 (2014), pp.2603-2608 |
| [BEC11] | R. J. Beck, A. J. Waddie, J. P. Parry, J. D. Shephard, "Adaptive Laser Beam Shaping for Laser Marking using Spatial light Modulator and Modified Iterative Fourier Transform Algorithm", Elsevier Physics Procedia 12 (2011), pp.465-469 |
| [KUA09] | Z. Kuang, W. Perrie, D. Liu, S. Edwardson, J. Cheng, G. Dearden, K. Watkins, "Diffractive multi-beam surface micro-processing using 10 ps laser pulses", Elsevier Appl. Surf. Sci.(2009), pp.9040-9044 |
| [KUA09_2] | Z. Kuan, D. Liu, W. Perrie, S. Edwardson; "Fast parallel diffractive multi-beam femtosecond laser surface micro-structuring", Applied Surface Science 255 (2009), pp.6582-6588 |
| [KUA08] | Z. Kuang, W. Perrie, J. Leach, M. Sharp, S. P. Edwardson, "High throughput diffractive multi-beam femtosecond laser processing using a spatial light modulator", Elsevier Appl. Surf. Sci.255 (2008), pp.2284-2289 |
| [JIN15] | Y. Jin, W. Perrie, P.Harris, O.J. Allegre, K.J. Abrahams, G. Dearden, "Patterning of Aluminium thinfilm on polyethylene terephthalate by multi-beam picosecond laser", Elsevire, Optics and Lasers in Engineering 74 (2015), pp.67-74 |
| [JES10] | Jesacher, M. J. Booth, "Parallel direct laser writing in three dimensions with spatially dependent aberration correction," Opt. Express 18, (2010), pp.21090-21099 |
| [HAS08] | S. Hasegawa, Y. Hayasaki, "Holographic Femtosecond Laser Processing with Multiplexed Phase Fresnel Lenses Displayed on a Liquid Crystal Spatial Light Modulator", OPT REV (2007), pp.208-213 |
| [RON12] | E. Ronzitti, M. Guillon, V. de Sars, V. Emiliani, "LCoS nematic SLM characterization and modeling for diffraction efficiency optimization, zero and ghost orders suppression", Opt. Express 20, (2012), pp.17843-17855 |

## Claims

1. A method for adaptively splitting a coherent primary light beam, comprising
producing a desired far-field distribution by phase modulating the primary light beam with a Spatial Light Modulator (SLM), the primary coherent light beam being directed to reflect on a display element of the spatial light modulator, thereby avoiding any moving elements to shape the primary coherent light beam,
extracting from the primary light beam, after it has passed the spatial light modulator, a monitoring beam and a main beam,
measuring the monitoring beam with a camera,
directing the desired far-field distribution in the monitoring beam on a sensor surface of the camera,
whereby in a first option, the method comprises guiding the primary beam through a first focusing element (L1) that is configured to focus the far-field distribution onto a focusing plane of the first focusing element as a real output distribution,
focusing the far-field distribution in the monitoring beam onto the sensor surface of the camera by means of the first focusing element, and in a second option, the method comprises
guiding the monitoring beam through a second focusing element (L2) that is configured to focus the far-field distribution on the sensor surface of the camera,
and for either the first or the second option
adjusting a dynamic range of the camera using a variable intensity regulator to control the intensity of the incoming monitoring beam as a function of the far-field distribution,
configuring a closed loop to enable a phase calculation for the display element of the spatial light modulator, whereby an output signal from the camera is input into the closed loop for a plurality of iterations of a phase-calculation algorithm performed by a controller,
wherein
in the first option, the first focusing element is used, excluding the second focusing element, and
in the second option, the second focusing element is used, excluding the first focusing element.

2. The method of claim 1, further comprising
providing the coherent primary light beam by means of a collimated and at least partially coherent light source.

3. The method of claim 2, further comprising
structuring a surface of a working tool with the main beam, and controlling the structuring by setting the spatial light modulator to reflect a determined profile for the primary light beam.

4. The method of claim 3, using the first option, further comprising
adjusting the focusing plane of the first focusing element for the step of structuring the surface of the working tool, such that the focusing plane corresponds to the surface of the working tool.

5. The method of claim 3, using the first option, further comprising
adjusting the focusing plane of the first focusing element to an intermediate plane, and projecting the intermediate plane by means of a projecting optical set-up in a reduced scale on the surface of the working tool.

6. The method of claim 3, using the second option, wherein
the step of structuring involves applying the far-field distribution, for obtaining the structures on the surface of the working tool, by projecting the far-field distribution by means of a projecting optical setup in a reduced scale on the surface of the working tool .

7. The method according to any one of claims 1 to 6, wherein
the step of extracting involves a beam-splitting element,
the method further comprising
integrating the beam-splitting element, the first and the second focusing elements, the spatial light modulator, the variable intensity regulator, and the camera into a single compact enclosure, whereby the single compact enclosure is configured to be an exclusive component to be placed in the primary coherent light beam, switching between the first option and the second option by means of a controller device, and
adjusting the variable intensity regulator by means of the controller device.

8. The method according to any one of claims 1 to 3, using the second option, further comprising
splitting the primary light beam into a plurality of partial main beams by means of the spatial light modulator,
individually adjusting a number of the plurality of partial main beams, angles of separation between the plurality of partial main beams after the plurality of partial main beams leaves the display element of the spatial light modulator, and intensities of the plurality of partial main beams among each other by phase control,
wherein the intensities of the plurality of partial main beams among each other is controlled by the controller that is further configured to control an individual generation for each of the plurality of partial main beams, the spatial light modulator and the primary light beam.

9. A device configured for an adaptive splitting of an intended collimated and at least partially coherent primary light beam, comprising
a Spatial Light Modulator (SLM) configured to produce a desired far-field distribution by phase modulation of the intended primary light beam, whereby the Spatial Light Modulator is further configured to reflect the primary light beam on a display element of the spatial light modulator, thereby avoiding any moving elements to shape the primary light beam;
a beam splitting element positioned in the intended primary light beam after it has passed the spatial light modulator, and configured to extracting from the primary light beam, an intended monitoring beam and an intended main beam;
a camera positioned in the intended monitoring beam and further comprising a sensor surface configured to measure the desired far-field distribution in the monitoring beam,
whereby in a first configuration option, the device comprises a first focusing element (L1) configured to focus the desired far-field distribution in the monitoring beam on the sensor surface of the camera, and further configured to guide the primary beam and focus the far-field distribution onto a focusing plane of the first focusing element as a real output distribution;
and in a second configuration option, the device comprises a second focusing element (L2) positioned in the intended monitoring beam and configured to focus the desired far-field distribution on the sensor surface of the camera,
and for either the first or the second configuration option, the device further comprises
a variable intensity regulator positioned in the intended monitoring beam in front of the camera, and configured to adjust a dynamic range of the camera by control of the intensity of the incoming intended monitoring beam as a function of the desired far field distribution;
a closed-loop set-up configured to enable a phase calculation for the display element of the spatial light modulator, comprising a controller connected to the camera to receive an output signal, and configured to use the output signal for a plurality of iterations of a phase-calculation algorithm performed in the controller,
wherein
in the first configuration option, the first focusing element is used, excluding the second focusing element, and
in the second configuration option, the second focusing element is used, excluding the first focusing element.

10. A device configured for a machining of a surface of a working tool, comprising the device according to claim 9, further comprising a collimated and at least partially coherent light source configured to produce the primary light beam, whereby the surface of the working tool is positioned in the main beam, and the machining results at least from a setting of the spatial light modulator to produce a determined profile for the primary light beam.

11. The device of claim 10, wherein the device according to claim 1 is configured in the first configuration option, and further wherein the focusing plane of the first focusing element is configured to correspond to the surface of the working tool.

12. The device of claim 10, wherein the device according to claim 1 is configured in the first configuration option, further comprising a projecting optical set-up, the first focusing element being positioned such that its focusing plane corresponds to an intermediate plane, and the projecting optical set-up being configured such that it projects the intermediate plane in a reduced scale on the surface of the working tool.

13. The device of claim 10, wherein the device according to claim 1 is configured in the second configuration option, further comprising a projecting optical set-up, and the projecting optical set-up being configured such that it projects the desired far field distribution of the main beam in a reduced scale on the surface of the working tool for the machining.

14. The device of any one of claims 9 to 13, further comprising a single compact enclosure configured to integrate the beam-splitting element, the first and second focusing elements, the spatial light modulator, the variable intensity regulator, and the camera, whereby the single compact enclosure is configured to be an exclusive component to be placed into the primary light beam;
further wherein the controller is configured to enable a switching between the first configuration option and the second configuration option, and to adjust the variable intensity regulator.

15. The device according to any one of claims 9 and 10, wherein the spatial light modulator is enabled to split the primary light beam into a plurality of partial main beams, and to individually adjust a number of the plurality of partial main beams, angles of separation between the plurality of partial main beams after the plurality of partial main beams leaves the display element of the spatial light modulator, and intensities of the plurality of partial main beams among each other by phase control,
wherein the controller is further configured to control the intensities of the plurality of partial main beams among each other, by control of an individual generation for each of the plurality of partial main beams, the spatial light modulator and the primary light beam.

16. The device according to any one of claims 10 to 15, wherein the surface of the working tool is a surface of an embossing roller and the controller is further configured to position the surface of the embossing roller in the main beam.
